## Europäisches Patentamt

## European Patent Office

## Office européen des brevets

(19)

(11) Veröffentlichungsnummer : **0 019 079**
**B1**

(12)

# EUROPÄISCHE PATENTSCHRIFT

(45) Veröffentlichungstag der Patentschrift :
16.02.83

(51) Int. Cl.³ : **G 06 K 13/063**

(21) Anmeldenummer : **80101877.1**

(22) Anmeldetag : **08.04.80**

(54) Einrichtung zum Positionieren von Belegen.

(30) Priorität : **12.04.79 DE 2914969**

(43) Veröffentlichungstag der Anmeldung :
**26.11.80 Patentblatt 80/24**

(45) Bekanntmachung des Hinweises auf die Patenterteilung : **16.02.83 Patentblatt 83/07**

(84) Benannte Vertragsstaaten :
**AT BE CH DE FR GB IT LI LU NL SE**

(56) Entgegenhaltungen :
**DE A 2 756 518**
**DE B 2 119 430**
**US A 3 578 315**
**IBM TECHNICAL DISCLOSURE BULLETIN, Band
14, Nr. 5, Oktober 1971 New York B.D. BERG-
SCHNEIDER et al. « Pressure Roll Assembly for
Document Cards » Seiten 1484 bis 1485**

(73) Patentinhaber : **Firma Joachim W. Pixa**
**Siemensstrasse 32**
**D-7053 Kernen (DE)**

(72) Erfinder : **Pixa, Joachim W.**
**Siemensstrasse 32**
**D-7053 Kernen (DE)**

(74) Vertreter : **Patentanwälte Ruff und Beier**
**Neckarstrasse 50**
**D-7000 Stuttgart 1 (DE)**

## Einrichtung zum Positionieren von Belegen

Die Erfindung betrifft eine Einrichtung zum Positionieren von blatt-, stapel- oder heftartigen Belegen, insbesondere OCR-Belegen zum ausgerichteten Transport auf einer Transportstrecke, auf der der vorzugsweise kontinuierlich ohne Zwischenstopp auszurichtende Beleg weitertransportiert wird, wobei zwischen einem Eingabebereich und der Transportstrecke wenigstens ein an den Belegflächen angreifender, mit je zwei zusammenwirkenden Reibrädern arbeitender Reibtransporteur angeordnet ist, dessen Transportrichtung zunächst schräg auf eine Führungsbahn für eine Belegkante zu gerichtet ist und der, wenn die Belegkante die Führungsbahn erreicht hat, unter der von dem Beleg ausgeübten Reaktionskraft entgegen einer Federkraft in eine zur Führungsbahn parallele Transportrichtung schwenkbar ist.

Eine derartige Einrichtung ist aus der Veröffentlichung « IBM-Technical-Disclosure-Bulletin », Band 14, Nr. 5 vom Oktober 1971, Seite 1484 und 1485 bekannt geworden. Sie besitzt eine Antriebsrolle mit vertikaler Achse und eine Gegendruckrolle, die in Transportrichtung schräg auf eine Führungsbahn zu gerichtet ist. Sie ist an Blattfedern so aufgehängt, daß sie unter der Reaktionskraft der auf die Führungsbahn stoßenden Karte in Richtung auf eine horizontale Förderung zurückschwenkbar ist. Mit dieser Einrichtung können nur relativ steife Karten mit unempfindlicher Oberfläche positioniert werden, weil zwischen der Transportrolle mit vertikaler Achse und der dazu schräg angeordneten Gegendruckrolle ein ständiger Schlupf vorhanden ist, der die Belegoberflächen beschädigt oder zumindest Spuren auf ihr hinterlassen und bei dünnen Belegen sogar zur Zerstörung der Belege führen kann. Außerdem findet eine ständige Abnutzung der aufeinanderreibenden Rollen statt, wenn kein Beleg vorhanden ist. Durch die Blattfederanordnung nimmt die zur Auslenkung der Gegendruckrolle in die Transportrichtung benötigte Kraft mit zunehmender Auslenkung zu.

Es ist ferner aus der gleichen Zeitschrift, Band 14, Nr. 7 vom Dezember 1971, Seite 2179 eine Einrichtung bekannt geworden, die mit festen, schräg abwärts gerichteten Rollenpaarungen arbeitet. Hier findet ein ständiger Transport in Richtung auf die Führungsbahn zu statt, so daß beim Abtransport ebenfalls ein Schlupf zwischen den Belegen und den Reibrädern stattfinden muß und eventuell dünnere Belege durch Stauchung auf der Führungsbahn oder Schlupf auf ihren Flächen beschädigt werden können. Ähnliche Einrichtungen sind aus der DE-OS 23 18 977 und 27 56 518 bekannt geworden.

Aufgabe der vorliegenden Erfindung ist es, die eingangs erwähnte Einrichtung in Bezug auf eine genaue und schonende Positionierung von Belegen verschiedenster Art und Dicke weiter zu verbessern.

Diese Aufgabe wird erfindungsgemäß dadurch gelöst, daß ein zweiteiliger Träger vorgesehen ist, der in einem Hauptteil und einem dazu beweglich geführten Trägerteil die beiden Reibräder mit im wesentlichen zueinander paralleler Achseinstellung drehbar lagert und die Reibräder durch eine nachgebende Andrückeinrichtung gegeneinanderdrückt und daß der zweiteilige gemeinsame Träger um eine quer zur Transportrichtung verlaufende Trägerachse drehbar gelagert ist.

Nunmehr schwenken beide Reibräder unter der Reaktionskraft des Beleges gemeinsam derart, daß ihre Transportrichtung von der schräg auf die Führungsbahn zu gerichteten Förderrichtung in die parallel zur Führungsbahn verlaufende Transportrichtung geändert wird, sowie der Beleg die Führungsbahn erreicht hat. Dies alles läuft ohne Schlupf zwischen den Reibrädern und dem Beleg bzw. den Reibrädern untereinander. Es ist festgestellt worden, daß Belege von Luftpostqualität bis zu dicken Karten ohne irgendwelche Einstellvorgänge an der Einrichtung ohne weiteres positioniert werden können. Die Belege verlassen dann die Positioniereinrichtung, vorzugsweise von horizontalfördernden Transportrollen angetrieben, mit einer ihrer Kanten auf der Führungsbahn laufend. Sowie ein Beleg einen der schwenkbaren Reibtransporteure verlassen hat, schwenkt dieser unter der Federkraft wieder in seine Schräg-Stellung zurück.

Dadurch, daß die Federkraft im Arbeitsbereich vorzugsweise im wesentlichen konstant ist, werden die von den Belegen zu übertragenden Kräfte, die zu einer Schwenkung des Reibtransporteurs führen, sehr gering gehalten. Dazu trägt vor allem bei, daß vorzugsweise der Antrieb über ein in Schwenkrichtung des Trägers auf das angetriebene Reibrad einwirkendes Antriebsorgan erfolgt. Bei einem solchen Antrieb wirkt also bei einem am Reibrad auftretenden Widerstand der Antrieb in Schwenkrichtung, d. h. bei der bevorzugten Lagerung des Trägers um eine unter der Führungsbahn liegende Achse, entgegen der Transportrichtung. Der Antrieb hilft also mit, die Schwenkung durchzuführen, ohne daß die dieser entgegenwirkende Federkraft, die für eine Rückschwenkung in die Schrägstellung sorgt, geschwächt werden müßte. Der Antrieb kann auf verschiedene Arten ausgebildet sein, beispielsweise über Zahnräder, einen flachen, an den Reibtransporteuren vorbeigeführten Antriebsriemen, Zahnriemen, elektromotorischen Direktantrieb o. dgl. Bevorzugt ist jedoch, wenn der Antrieb des Reibtransporteurs über einem im wesentlichen koaxial mit der Trägerachse drehbares Antriebsrad erfolgt, das mit einem der Reibräder, vorzugsweise mit dessen am Beleg angreifender Reibfläche zusammenwirkt. Bei dieser an sich aus der DE-B-21 19 430 bekannten Anordnung ist sichergestellt, daß auch zwischen dem Antriebsrad und dem Reibtransporteur beim Verschwenken kein Schlupf- oder Reibverschleiß auftritt und die Anordnung ist sehr einfach herzustellen.

Die Erfindung ermöglicht es, einen Beleg in der für die Betrachtung besonders günstigen vertikalen Lage auf kürzestem Wege zu einem seiner Kanten genau, schonend und kontinuierlich zu positionieren und dann vorzugsweise ebenfalls kontinuierlich (jedoch, wenn gewünscht, auch diskontinuierlich) weiterzutransportieren. Durch die schwenkbaren schrägen Reibtransporteure kann ein Beleg beispielsweise innerhalb von 20 mm Transportweg positioniert werden, so daß die Vorrichtung sehr raumsparend aufgebaut sein kann.

Weitere Vorteile und Merkmale der Erfindung gehen aus den Unteransprüchen hervor. Ein Ausführungsbeispiel der Erfindung ist in der Zeichnung dargestellt und wird im folgenden näher erläutert. Es zeigen :

Figur 1 eine schematische Frontansicht einer Beleg-Bearbeitungsmaschine (OCR-Codiergerät),

Figur 2 eine Draufsicht auf das Gerät nach Fig. 1,

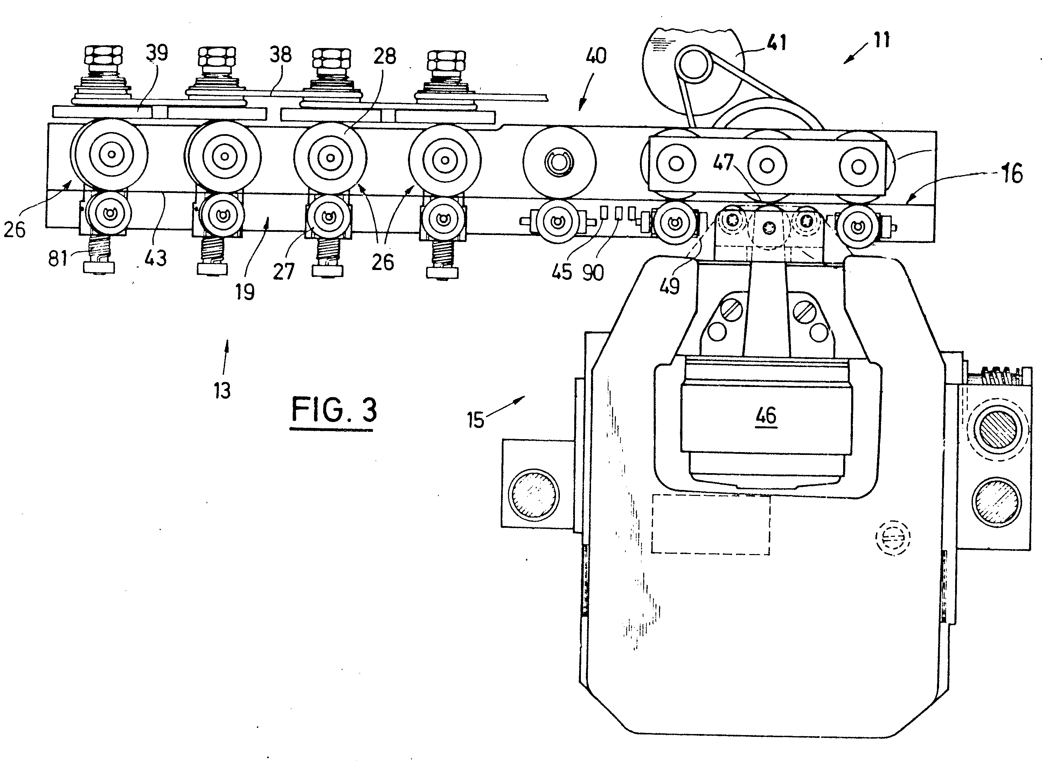

Figur 3 eine Draufsicht auf einen Teil des Gerätes (ohne Gehäuse und Rahmen),

Figur 4 eine Frontansicht des in Fig. 3 gezeigten Gerätes ohne Druckeinrichtung und

Figur 5 einen Teilschnitt nach der Linie V-V in Fig. 4.

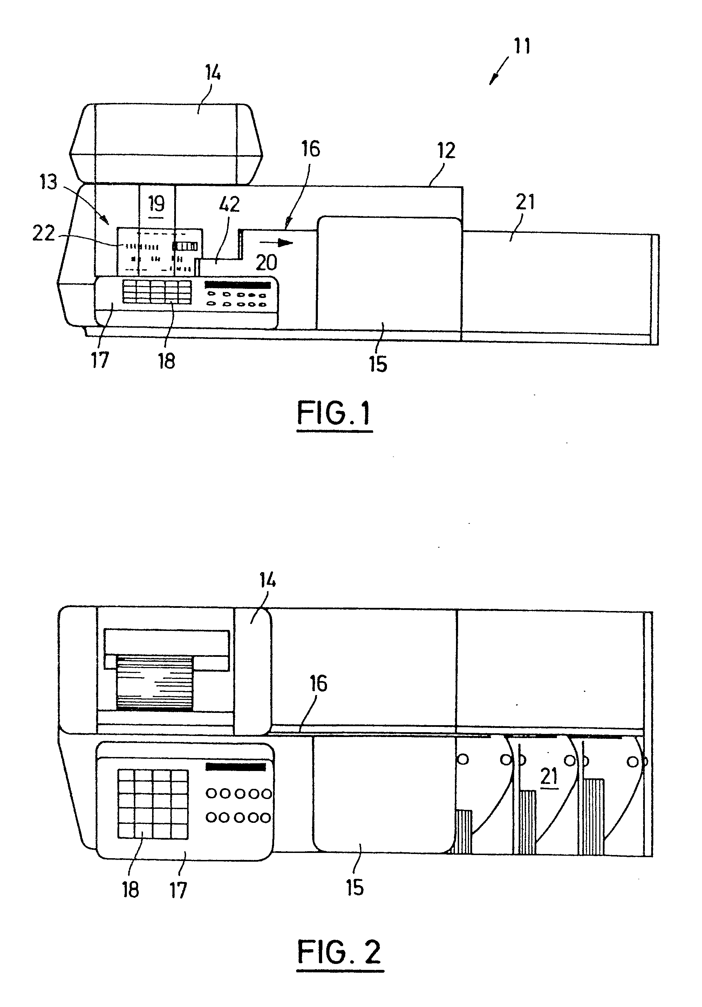

Das in Fig. 1 und 2 in seiner Außenansicht und Draufsicht dargestellte Belegbearbeitungsgerät 11 ist ein Universalgerät, das in entsprechender Ausrüstung als OCR-Mehrfeld-Konstantencodierer, OCR-Schalterquittungs-Codiergerät oder OCR-Codierplatz (z. B. intern in einem Geldinstitut) eingesetzt werden kann. Das Gerät ist baukastenartig aus folgenden Einrichtungen oder Baugruppen zusammengesetzt : Einem Grundgerät 12 mit einer Positioniereinrichtung 13, einem aufgesetzten Abstapler 14, einer horizontal neben der Positioniereinrichtung 13 angeordneten Druckeinrichtung 15, die mit der Positioniereinrichtung durch eine im wesentlichen horizontal verlaufende Transportstrecke 16 verbunden ist, einer abnehmbar an dem Grundgerät vor dem Eingabebereich 19 der Positioniereinrichtung angeordneten Eingabe- und Steuereinrichtung 17 mit einer Tastatur 18 und ggf. einer in Belegtransportrichtung 20 hinter dem Druckwerk 15 angeordneten Sortier- und Stapeleinrichtung 21, die wahlweise an das Grundgerät angeschlossen werden kann und auf beliebig viele Sortierfächer erweiterungsfähig ist.

Bei den zu bearbeitenden Belegen handelt es sich meist um sog. OCR-Belege, d. h. Belege, die normalerweise im Zahlungsverkehr verwendet werden und mit alphanumerischen Zeichen bedruckt oder zu bedrucken sind, die auch maschinell lesbar sind. Das Hauptanwendungsgebiet liegt also bei der Bearbeitung von Scheck- und Überweisungsvordrucken, Sparbüchern o. dgl. Im folgenden ist der Einfachheit halber unter Beleg jedes zu bedruckende, zu sortierende, zu lesende oder auf andere Art zu bearbeitende Schriftstück zu verstehen, das blatt-, stapel- oder heftartig ist.

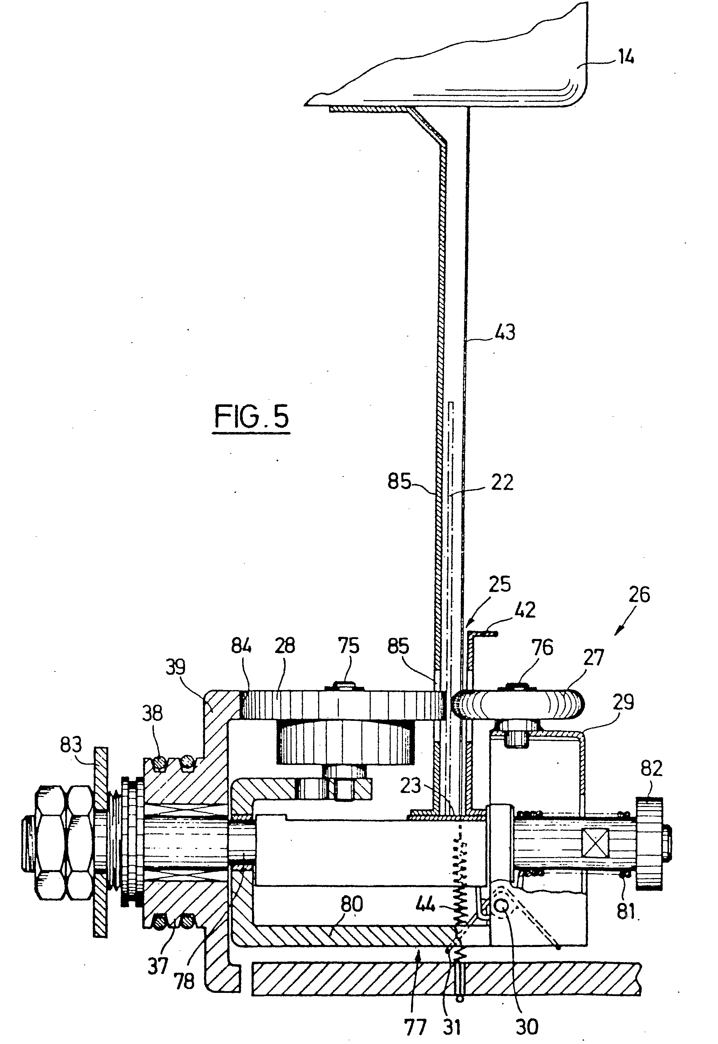

Die Positioniereinrichtung 13 dient dazu, Belege 22, die am Eingabebereich 19 entweder vom Abstapler 14 oder manuell zugeführt werden, zu einer nachfolgenden Bearbeitung, im vorliegenden Beispiel zum Bedrucken durch die Druckeinrichtung 15, genau zu positionieren, d. h. längs einer horizontal verlaufenden Führungsbahn 23 (Fig. 5) auszurichten und derart ausgerichtet horizontal zu transportieren. Der Abstapler, der beispielsweise nach der DE-A-29 14 097 bzw. der EP-A-00 17 227 aufgebaut sein kann, läßt die Belege nacheinander einzeln mit im wesentlichen vertikaler Ausrichtung ihrer Flächen im Eingabebereich fallen, wobei normalerweise die untere Längskante 24 der Belege 22 in etwa horizontal ausgerichtet ist. Sie fallen dabei, wie aus Fig. 5 zu erkennen ist, im Bereich eines vertikalen, jedoch horizontal langgestreckten Transportschlitzes 25 auf Reibtransporteure, die bei der vorliegenden Ausführungsform als Sätze voneinander gegenüberliegenden Reibrädern aus Gummi oder einem anderen elastischen Material mit gutem Reibkoeffizienten ausgebildet sind.

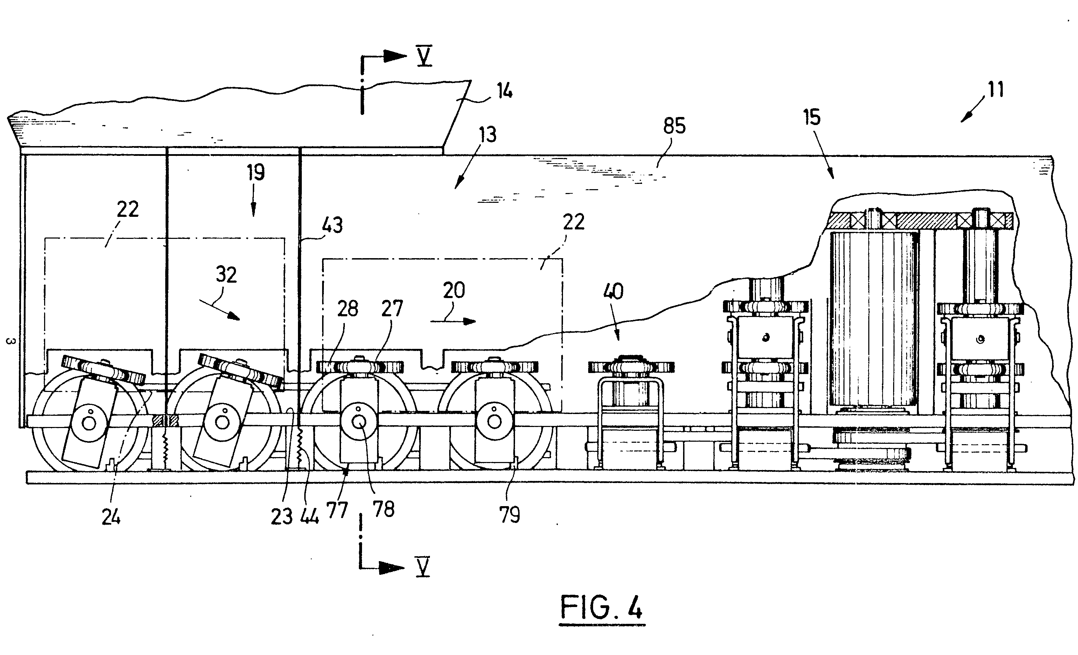

Aus Fig. 4 ist zu erkennen, daß längs des Führungsschlitzes 25, der zusammen mit der Führungsbahn 23 (dem Boden des Schlitzes) bei der Bewegung der Belege in Transportrichtung 20 die Transportstrecke 16 bildet, insgesamt vier in ihrer Transportrichtung veränderbare Reibtransporteure 26 weitere Reibtransporteure 40 mit horizontaler Förderrichtung angeordnet sind.

Die richtungsveränderlichen Reibtransporteure 26 sind jeweils durch einander gegenüberliegende Reibräder 27, 28 gebildet, die um Achsen 75, 76 drehbar sind, die an einem Träger 77 angebracht sind. Der Träger 77 ist um eine horizontale, quer zur Erstreckung der Führungsbahn 23 unterhalb dieser verlaufende Achse 78 begrenzt schwenkbar, und zwar zwischen einer Stellung, in der die Achsen 75, 76 der Reibräder die in Fig. 4 links dargestellte Schräge einnehmen und einer durch einen Anschlag 79 begrenzten Stellung, in der die Reibräderachsen senkrecht sind (in Fig. 4 der dritte und vierte Reibtransporteur 26). Die Förderrichtung der Reibtransporteure ist bei ihrer Schrägstellung schräg abwärts gerichtet (Pfeil 32) und entspricht bei ihrer Geradeaus-Stellung der Haupttransportrichtung (Pfeil 20). Die maximale Schrägstellung beträgt vorzugsweise 15°, kann jedoch je nach den Erfordernissen zwischen 5 und 30° variieren.

Der Träger 77 besteht aus einem Hauptteil 80 in Form eines G bzw. C, das an einem freien Schenkel die Achse 75 des Reibrades 28 trägt und auf der Achse 78 zweifach gelagert ist. An dem Hauptteil 80 ist um eine im wesentlichen horizontal in Förderrichtung verlaufende Achse 30 ein Trägerteil 29 schwenkbar gelagert, das an seinem oberen Ende die Achse 76 des Reibrades 27 trägt. Dieses freilaufende Reibrad 27 ist dementsprechend unter der Kraft einer als Federbügel 31 ausgebildeten nachgebenden Andrückeinrichtung gegen das andere Reibrad 28 schwenkbar angedrückt.

Auf einer Verlängerung der Achse 78 ist eine Feder 81 in Form einer auf Drehung beanspruchten Schraubenfeder angeordnet, die mittels eines Einstellbundes 82 in ihrer Federstärke einstellbar ist und den Träger 77 in seine schräge Lage (in Fig. 4 links) drückt.

Die Achse 78 ist an einem Gestellteil 83 angebracht. Auf ihr ist ein Antriebsrad 39 gelagert, das durch jeweils von einer Riemenscheibe 37 zur anderen reichenden Rundriemen 38 von einem Motor 41 angetrieben ist. Dieses um die horizontale und quer zur Förderrichtung verlaufende Achse 78 drehbare Antriebsrad hat an einer seiner in Achsrichtung weisenden Flächen eine Reib-Fläche 84, die einen Ring in einer zur Achse 78 radialen Ebene bildet, auf der die Achse 78 senkrecht steht.

Die Reibtransporteure werden alle vom gleichen Antrieb aus mit gleicher Geschwindigkeit angetrieben.

Beim dargestellten Beispiel ist das vom Antriebsrad 38 angetriebene Reibrad 28 größer und hat eine im wesentlichen zylindrische Form, während das ihr gegenüberliegende, um eine dazu parallele Achse drehende Reibrad 27 eine torische (ballonreifenförmige) Gestalt hat.

Die Reibräder ragen durch Öffnungen 86 in den Wandungen 86 des Transportschlitzes 85 etwas oberhalb der Führungsbahn 23 so hindurch, daß eine von oben hereinfallender Beleg 22 auf den unter der Kraft der Andrückeinrichtung 31 geschlossenen Spalt zwischen beiden Reibrädern fällt. Er steht damit nur sehr wenig unterhalb des zur Bedienungsseite hin niedrigen oberen Endes 42 der Führungsschlitzwandung, so daß er in dieser Lage bis zur untersten Zeile hin offenliegt und lesbar ist. Durch die Drehung der Reibräder 27, 28 wird der Beleg, der mindestens so groß ist, daß er von zwei der Reibtransporteure 26 ergriffen wird, in der schrägen Förderrichtung 32, d. h. schräg abwärts bewegt, bis er mit seiner unteren Kante 24 auf der Führungsbahn 23 aufliegt·(siehe strichliert angedeutete Belege 22 in Fig. 4). Während bis dahin der Transport ohne wesentlichen Widerstand verlief, setzt nunmehr die Führungsbahn 23 dem in der schrägen Richtung 32 geförderten Beleg einen Widerstand entgegen, was dazu führt, daß der Träger 77 und damit die Reibräder entgegen der einstellbaren Kraft der Feder 81 in die Stellung schwenken, die in Fig. 4 bei den zweiten und dritten Reibtransporteuren dargestellt ist, d. h. in eine Stellung, in der die Reibtransporteurachsen vertikal und die Transportrichtung 20 horizontal verläuft.

Diese Schwenkung erfolgt automatisch und ohne, daß der Beleg wesentliche Reaktionskräfte ausüben muß. Sie wird unterstützt durch die Wirkung des Antriebs. Durch die beschriebene Antriebsanordnung erzeugt nämlich das Antriebsrad 39 bei einem Widerstand am Reibrad 28 eine entgegen der Transportrichtung, d. h. in Schwenkrichtung gerichtete Kraft.

Die beschriebene koaxiale Anordnung zwischen Antriebsrad und Träger (die man auch als planeten- oder differentialähnliche Anordnung bezeichnen könnte) sorgt außer diesem Vorteil dafür, daß das Reibrad bei seiner Schwenkung auf dem gleichen Reibdurchmesser bleibt und daher der Schwenkung keinen Widerstrand entgegensetzt und keine Obersetzungsänderung erfährt. Es ist jedoch, wenn auch mit größerem Aufwand, möglich, eine andere Antriebsart zu wählen, beispielsweise eine Zahnradübertragung auf das Reibrad 28 oder auch einen unabhängigen Direktantrieb eines der Reibräder, beispielsweise mit kleinen Elektromotoren, vorzusehen. Wesentlich ist, daß beide Reibräder in allen Arbeitsstellungen zueinander parallele Achsen haben, um keine Schubkräfte auf die Belege auzuüben.

Es ist festgestellt worden, daß die automatische Schwenkung in die Geradeaus-Stellung so leicht und sicher erfolgt, daß selbst dünnste Belege ohne Stauchung oder Knittern oder sonstige Beschädigung auf ihrer unteren Kante 24 stehend auf der Führungsbahn 23 transportiert werden. Durch die Wirkung der Positioniereinrichtung werden auch eventuell schräg eingegebene oder vom Abstapler schräg herunter fallende Belege so ausgerichtet, daß sie auf der Kante 24 stehend horizontal weitertransportiert werden.

Aus den Fig. 4 und 5 ist zu erkennen, daß im Eingabebereich 19 etwa mittig durch den Transportschlitz 25 zwei oder mehrere Drähte 43 gespannt sind, die von dem Abstapler 14 bis zur Mitte der Führungsbahn 23 herunterlaufen, durch Löcher in dieser hindurchreichen und durch Federn 44 gespannt sind. Sie verlaufen jeweils in der Mitte zwischen zwei Reibtransporteuren. Die Drähte 43 laufen, von der Bedienungsseite aus gesehen, vor den aus dem Abstapler kommenden Belegen und bieten eine zusätzliche Sicherheit dafür, daß die Belege nicht nach vorn herauskippen. Andererseits ist es aber auch möglich Belege, beispielsweise Sparbücher oder Einzelbelege, von außen her einzugeben, indem sie auf der Außenseite der Drähte 43 in den oberen Teil des Transportschlitzes 25 gestellt werden. Die Drähte 43 können einerseits auch in Querrichtung des Schlitzes etwas nachgeben und andererseits ist der Schlitz meist breiter als die doppelte Belegstärke.

Aus Fig. 1 ist zu erkennen, daß anschließend an den Eingabebereich 19 die bedienungsseitige Begrenzung 42 des Transportschlitzes 25 höher wird und schließlich im Bereich der Transportstrecke, in dem die horizontalen Reibtransporteure 40 angeordnet sind, den ganzen Beleg abdeckt.

Es hat sich herausgestellt, daß die beschriebene Positioniereinrichtung mit sehr großer Positioniergenauigkeit außerordentlich schnell arbeitet. Die in hoher Frequenz unmittelbar aufeinanderfolgend aus dem Abstapler 14 herausfallenden Belege werden sofort positioniert und mit großer Geschwindigkeit horizontal abtransportiert. Statt bzw. zusätzlich zu einem von oben her abstapelnden Abstapler 14 könnte auch ein Abstapler vorgesehen sein, der die Belege weitgehend horizontal, d. h. in Fig. 1 von links her in den Eingabebereich 19 eingibt. Von dort könnten auch Belege eingeschoben werden, wenn man den Führungsschlitz bis zur äußeren Begrenzung führt.

Der Antrieb der Positioniereinrichtung und Transportstrecke erfolgt in Abhängigkeit von dem Verwendungszweck und den Gegebenheiten. Bei einem OCR-Konstantencodierer, der beispielsweise auf Scheckvordrucke die Kontonummer aufdruckt, wird der Antrieb durchlaufen und, was durch die im folgenden näher beschriebene Druckeinrichtung 15 möglich ist, möglichst dicht aufeinanderfolgend kontinuierlich durch die Druckeinrichtung laufen lassen. Bei einem Schalterquittungs-Codiergerät oder einem Codierplatz, bei dem Überweisungsvordrucke mit den entsprechenden Beträgen bedruckt werden, wird der Antrieb während des Eintastens der Angaben auf der Tastatur 18 abgeschaltet sein, so daß dann der Beleg frei sichtbar im Eingabebereich 19 steht. Ein Schlußsignal wird dann den Antrieb einschalten und den Beleg zum Bedrucken mit den eingetasteten und zwischengespeicherten Signalen durch die Druckeinrichtung führen. Danach fällt dann automatisch oder auf besonderes Signal ein weiterer Beleg in den Eingabebereich.

Im Bereich der Positioniereinrichtung 13 bzw. der Transportstrecke 16 sind mehrere Fühler 45 in Form von Fotozellen angebracht, die durch Abtasten der Vorder-, Hinter- bzw. Oberkante der Belege deren Größe und damit Art feststellen und zur Steuerung der Druckeinrichtung bezüglich der zu beschriftenden Position (Zeile) steuern und nach entsprechender Zwischenspeicherung die Lenkung der Belege in das ihnen zugehörige Fach der Sortier- und Stapeleinrichtung 21 steuern. Zusätzlich ist ein Fühler 90 vorgesehen, der auf kapazitivem Wege die Dicke des Beleges mißt und damit eine Sicherheit gegen eventuelles doppeltes Einziehen von Belegen schafft. Er schaltet bei Feststellung doppelt liegender Belege den Transport und damit die Druckeinrichtung ab. Die Druckeinrichtung 15 besitzt einen Matrix-Druckkopf 46 üblicher Bauart. Er besitzt als schriftbildende Elemente eine Anzahl (normalerweise 9) vertikal übereinander angeordneter Nadeln, die aus seiner Frontfläche 47 unter der Wirkung von den einzelnen Nadeln zugeordneten Elektromagneten mit großer Präzision und nötigenfalls in kurzer Folge herausgetrieben werden.

Der Druckkopf 46 ist in Zeilenrichtung (Transportrichtung 20) fest angeordnet und der Beleg 22 bewegt sich kontinuierlich auf einer im wesentlichen geradlinigen Bahn an ihm vorbei. Durch die in kürzester Folge gesteuert anschlagenden Nadeln wird auf dem vorbeibewegten Beleg über ein Farbband 49 ein Schriftzeichen erzeugt. Es ist zu bemerken, daß für die OCR-Technik die Qualität der Schriftzeichen, ihre Verzeichnungsfreiheit und gleichmäßige Einfärbung außerordentlich hohen Anforderungen genügen muß. Schon eine geringfügige Änderung der Relativgeschwindigkeit zwischen Druckkopf und Beleg würde zu einer Verzerrung der Zeichen führen, die bei der maschinellen Lesung zu Fehl-Erkennungen oder zu der Notwendigkeit führen würden, den Beleg manuell nachzukodieren. Erstaunlicherweise gelingt es, diese honen Anforderungen trotz des kontinuierlichen, freien Beleg-Durchlaufes mit hoher Geschwindigkeit zu erfüllen, wozu die im folgenden beschriebenen Merkmale beitragen.

Das beschriebene Belegbearbeitungsgerät hat zahlreiche Vorteile. Durch die Positioniereinrichtung mit horizontaler Belegführung wird ein besonders leicht an unterschiedliche Gegebenheiten anzupassendes Gerät geschaffen, das alle Aufgaben eines OCR-Codierers ohne besondere Umbauten erfüllen kann. Dabei sind unterschiedliche Abstapler und Sortiereinrichtungen leicht anzuschließen. Durch die horizontale Belegführung ist ferner die Einsehbarkeit der Belege während der Bearbeitung besonders gut und das Gerät kann leicht als ein Tischgerät ausgebildet werden, das in der Länge beliebig zu erweitern ist. Dadurch, daß ein grosser Bereich von Papiergewichten zwischen 40 und 500 g/m$^2$ sicher positioniert werden können, kann praktisch jeder Beleg verarbeitet werden. Es ist auch ohne weiteres möglich, Belege unterschiedlicher Höhe und Breite ohne vorherige Umstellung durch die Positionier- und Druckeinrichtung laufen zu lassen.

Im Verlaufe der horizontalen Transportstrecke könnten auch andere Einrichtungen vorgesehen werden, es könnten beispielsweise zusätzlich oder statt der Druckeinrichtung eine Leseeinrichtung oder ein Kontrollzeichendrucker eingebaut werden. Obwohl die Anordnung der Eingabe und Steuereinrichtung, die auch die gesamte Steuerelektronik für den Drucker enthalten kann, sehr klein (in der Größe eines normalen Tischrechners) aufgebaut und daher am Belegbearbeitungsgerät selbst angebracht sein kann, ist es auch möglich, die Eingabe- und Steuereinrichtung abzunehmen und an anderer Stelle anzuordnen, wenn dies vom Arbeitsablauf her Vorteile bringt.

Vorteilhaft wird man so viele Reibtransporteure im Positionierbereich vorsehen, daß ein Beleg stets mindestens von zwei Reibtransporteuren erfaßt wird. Es wäre jedoch auch möglich, mit nur einem den Beleg erfassenden Reibtransporteur auszukommen, wenn die Belege ausreichend steif sind, um sich beim Kontakt mit der Führungsbahn wieder auszurichten oder wenn beispielsweise eine etwas längere Bandstrecke als Reibtransporteur Verwendung findet. Ein besonderer Vorteil ist es, daß der Beleg frei und ohne einen seitlichen Führungsschacht zugeführt werden kann, so daß Belege unterschiedlichster Größe ohne Maschinenumstellung positioniert werden können. Der Beleg führt bei der Positionierung, beispielsweise wenn er von oben her zugeführt wird, zuerst eine vertikale Bewegung, dann eine in Förderrichtung schräg nach unten gerichtete Bewegung aus, um dann horizontal abgeführt zu werden. Alle diese Bewegungen werden kontinuierlich ohne einen Zwischenstopp zur Positionierung vorgenommen, wobei der Beleg keine bestimmte vorgeschriebene Bahn einhalten muß.

Es ist bei normalen Belegen vorteilhaft, wenn der Führungsschlitz und somit die Belegführung vertikal ist, d. h., daß der Beleg auf einer seiner Seiten, vorzugsweise der Längsseite, steht. Bei großen Belegen kann aber auch ein schräger oder sogar horizontal liegender Führungsschlitz und damit ein entsprechender horizontaler Transport vorgesehen sein. Es wird dabei beispielsweise vermieden, daß die frei herunterfallenden Belege, wenn sie zu groß sind, allein durch den Schwerkrafteinfluß einer Stauchung im oberen Bereich ausgesetzt werden, obwohl sie kontinuierlich abgebremst werden. Die Schwerkraft hilft zwar bei der Positionierung in geringer Weise mit, ist jedoch zur richtigen Positionierung nicht erforderlich. In jedem Falle kann es vorteilhaft sein, wenn auch die im Bereich der Druckeinrichtung liegenden Transportrollen unter einem sehr geringen Winkel abwärts gerichtet sind, um stets einen Kontakt zwischen der Positionierkante 24 des Beleges und der Führungsbahn 23 sicherzustellen. Auch bei der Positioniereinrichtung findet eine automatische Dickeneinstellung statt, indem die Rolle 27 entsprechend der Belegdicke etwas abschwenkt.

**Ansprüche**

1. Einrichtung zum Positionieren von blatt-, stapel- oder heftartigen Belegen, insbesondere OCR-Belegen (22), zum ausgerichteten Transport auf einer Transportstrecke (16), auf der der vorzugsweise kontinuierlich ohne Zwischenstopp ausgerichtete Beleg weitertransportiert wird, wobei zwischen einem Eingabebereich (19) und der Transportstrecke (16) wenigstens ein an den Belegflächen angreifender, mit je zwei zusammenwirkenden Reibrädern arbeitender Reibtransporteur (26) angeordnet ist, dessen Transportrichtung (32) zunächst schräg auf eine Führungsbahn (23) für eine Belegkante gerichtet ist und der, wenn die Belegkante die Führungsbahn (23) erreicht hat, unter der von dem Beleg (22) ausgeübten Reaktionskraft entgegen einer Federkraft (81) in eine zur Führungsbahn parallele Transportrichtung (20) schwenkbar ist, dadurch gekennzeichnet, daß ein zweiteiliger Träger (77) vorgesehen ist, der in einem Hauptteil (80) und einem dazu beweglich geführten Trägerteil (29) die beiden Reibräder (27, 28) mit im wesentlichen zueinander paralleler Achseinstellung drehbar lagert und die Reibräder (27, 28) durch eine nachgebende Andrückeinrichtung (31) gegeneinander drückt und daß der zweiteilige gemeinsame Träger (77) um eine quer zur Transportrichtung (20) verlaufende Trägerachse (78) drehbar gelagert ist.

2. Einrichtung nach Anspruch 1, dadurch gekennzeichnet, daß die Federkraft (81) im Arbeitsbereich im wesentlichen konstant ist.

3. Einrichtung nach Anspruch 1 oder 2, dadurch gekennzeichnet, daß der Antrieb des Reibtransporteurs (26) über ein in Schwenkrichtung des Trägers (77) auf das angetriebene Reibrad (28) einwirkendes Antriebsorgan (39) erfolgt.

4. Einrichtung nach Anspruch 3, dadurch gekennzeichnet, daß der Antrieb des Reibtransporteurs (26) über ein im wesentlichen koaxial mit der Trägerachse (78) drehbares Antriebsrad (39) erfolgt, das mit einem der Reibräder (28), vorzugsweise mit dessen am Beleg angreifender Reibfläche zusammenwirkt.

5. Einrichtung nach einem der vorhergehenden Ansprüche, dadurch gekennzeichnet, daß mehrere Reibtransporteure (26) mit sich automatisch anpassender Transportrichtung (32, 20) längs der vorzugsweise als vertikaler Schlitz (25) ausgebildeten, im wesentlichen horizontalen Transportstrecke, deren Boden die Führungsbahn (23) bildet, angeordnet sind.

6. Einrichtung nach einem der vorhergehenden Ansprüche, dadurch gekennzeichnet, daß die Belegeingabe im Eingabebereich (19), in dem die eine Begrenzungswand (42) des Transportschlitzes (25) vorzugsweise nur einen kleinen Teil der Beleghöhe einnimmt, vertikal im freien Fall, ggf. von einem darüber angeordneten Abstapler (14) sowie durch manuelle Eingabe quer oder parallel zur Transportrichtung (20) durchführbar ist.

7. Einrichtung nach einem der vorhergehenden Ansprüche, dadurch gekennzeichnet, daß im Eingabebereich (19) im wesentlichen vertikale Führungsdrähte (43) angeordnet sind, die etwa in der Mitte der Führungsbahn (23) hindurchragen und vorzugsweise abgefedert sind.

8. Einrichtung nach einem der vorhergehenden Ansprüche, dadurch gekennzeichnet, daß sie in einem Belegbearbeitungsgerät (11) eingesetzt ist, in dem die Positioniereinrichtung (13) horizontal neben einer Druckeinrichtung (15) angeordnet ist und mit dieser durch die Transportstrecke (16) verbunden ist, wobei ggf. horizontal anschließend eine Sortier- und Stapeleinrichtung (21) vorgesehen ist.

9. Einrichtung nach einem der vorhergehenden Ansprüche, dadurch gekennzeichnet, daß eine elektronische Eingabe- und Steuereinrichtung (17) mit einer Tastatur (18), vorzugsweise abnehmbar vor dem Eingabebereich angeordnet ist und daß der Antrieb (41) in Abhängigkeit von einem Steuerimpuls aus der Eingabe- und Steuereinrichtung (17) ein- und ausschaltbar ist.

10. Einrichtung nach einem der vorhergehenden Ansprüche, dadurch gekennzeichnet, daß an der Transportstrecke (16) hinter dem Eingabebereich (19) Fühler (45, 90, 65) für eine Größenmessung der Belege zur Ermittlung der Belegart, für eine vorzugsweise durch Durchlichtmessung vorgenommene Kontrolle gegen doppel bzw. geschuppt geförderte Belege und/oder für eine insbesondere auf induktivem Wege vorgenommene Dickenmessung der Belege angeordnet sind.

## Claims

1. Device for positioning sheet, stack or book-like documents, particularly OCR-documents (22), for oriented transfer on a transfer section (16), on which the preferably continuously oriented document is transferred without an intermediate stop, whilst between a feed area (19) and the transfer section (16) is arranged at least one friction conveyor (26) operating with pairs of cooperating friction wheels and engaging on the document faces and whose transfer direction (32) initially slopes towards a guideway (23) for a document edge and which, when the document edge has reached the guideway (23), can be pivoted into a transfer direction (20) parallel to the guideway under the force of reaction exerted by document (22) and counter to a spring tension (81), characterized in that a two-part support (77) is provided, which in a main part (80) and a support part (29) movably guided with respect thereto rotatably mounts the two friction wheels (27, 28) with an axial setting substantially parallel to one another and the friction wheels (27, 28) are pressed against one another by a yielding pressure device (31), and that the two-part joint support (77) is rotatably mounted about a support axis (78) at right angles to the transfer direction (20).

2. Device according to claim 1, characterized in that the spring tension (81) in the operating area is substantially constant.

3. Device according to claims 1 or 2, characterized in that the friction conveyor (26) is driven by means of a drive element (39) acting on the driven friction wheel (28) in the pivoting direction of support (77).

4. Device according to claim 3, characterized in that the friction conveyor (26) is driven by means of a drive wheel (39) rotatable substantially coaxially with support axis (78) and which cooperates with one of the friction wheels (28), preferably with its friction surface engaging on the document.

5. Device according to one of the preceding claims, characterized in that a plurality of friction conveyors (26) with automatically adapting transfer direction (32, 20) are provided along the substantially horizontal transfer section, preferably constructed as a vertical slot (25), whose base forms the guideway (23).

6. Device according to one of the preceding claims, characterized in that the documents can be fed in in feed area (19), in which one boundary wall (42) of the transfer slot (25) preferably only takes up a small part of the document height, vertically in free fall, optionally from an unstacking device (14) positioned above it, as well as by manual feed-in at right angles or parallel to transfer direction (20).

7. Device according to one of the preceding claims, characterized in that substantially vertical guide wires (43) are arranged in the feed area (19) and project through approximately in the centre of guideway (23) and are preferably sprung.

8. Device according to one of the preceding claims, characterized in that it is introduced into a document processing means (11), in which the positioning device (13) is positioned horizontally beside a pressure device (15) and is connected thereto by transfer section (16), a sorting and stacking device (21) optionally following horizontally on to the same.

9. Device according to one of the preceding claims, characterized in that an electronic input and control device (17) with a keyboard (18) is preferably removably arranged in front of the feed area, and that drive (41) can be switched on and off as a function of the control pulse from input and control device (17).

10. Device according to one of the preceding claims, characterized in that sensors (45, 90, 65) for measuring the document size for determining the document type, for a check, preferably performed by transmitted light measurement, against documents conveyed double or in ragged manner and/or for an in particular inductively performed thickness measurement of the documents are arranged on the transfer section (16) behind the feed area (19).

## Revendications

1. Dispositif pour positionner des documents sous forme de feuilles, de piles ou de cahiers, en particulier des documents OCR (22), devant être transportés alignés sur un trajet de transport (16) sur lequel le document à aligner est acheminé de préférence en continu sans interruption intermédiaire, dans lequel, entre une zone d'introduction (19) et le trajet de transport (16), se trouve au moins un transporteur à friction (26) en prise avec les faces du document, fonctionnant à chaque fois avec deux galets de friction coopérant, dont la direction de transport (32) est tout d'abord orientée à l'oblique vers une piste de guidage (23) pour un bord du document et qui, lorsque le bord du document a atteint la piste de guidage (23), peut pivoter dans une direction de transport (20) parallèle à la piste de guidage par suite de la force de réaction exercée par le document (22) à l'encontre d'une force élastique (81), caractérisé par le fait qu'il est prévu un support (77) en deux parties qui soutient en rotation, par une partie principale (80) et une partie de support (29) guidée de façon mobile par rapport à cette dernière, les deux galets de friction (27, 28) dont les axes sont ajustés sensiblement parallèlement l'un à l'autre, et qui pousse l'un contre l'autre les galets de friction (27, 28) par l'intermédiaire d'un dispositif de pression (31) fléchissant, et par le fait que le support commun (77) en deux parties est monté rotatif autour d'un axe de support (78) s'étendant perpendiculairement à la direction du transport (20).

2. Dispositif selon la revendication 1, caractérisé par le fait que la force élastique (81) est sensiblement constante dans la zone de travail.

3. Dispositif selon la revendication 1 ou 2, caractérisé par le fait que l'entraînement du transporteur à friction (26) est assuré par un organe d'entraînement (39) qui agit, sur le galet de friction entraîné (28), dans la direction de pivotement du support (77).

4. Dispositif selon la revendication 3, caractérisé par le fait que l'entraînement du transporteur à friction (26) est assuré par une roue d'entraînement (39) qui, pouvant tourner sensiblement coaxialement à l'axe (78) du support, coopère avec l'un des galets (28) de friction, de préférence avec la surface de frottement de ce dernier en prise avec le document.

5. Dispositif selon l'une des revendications précédentes, caractérisé par le fait que plusieurs transporteurs à friction (26) à direction de transport (32, 20) s'adaptant automatiquement sont disposés le long du trajet de transport sensiblement horizontal conformé de préférence en une fente verticale (25) et dont le fond forme la piste de guidage (23).

6. Dispositif selon l'une des revendications précédentes, caractérisé par le fait que l'insertion des documents peut avoir lieu, dans la zone d'introduction (19) dans laquelle l'une des parois de délimitation (42) de la fente d'acheminement (25) reçoit de préférence seulement une petite partie de la hauteur des documents, verticalement en chute libre, éventuellement grâce à un distributeur susjacent (14), ainsi que par une introduction manuelle perpendiculairement ou parallèlement à la direction de transport (20).

7. Dispositif selon l'une des revendications précédentes, caractérisé par le fait que, dans la zone d'introduction (19), sont placés des fils de guidage (43) sensiblement verticaux, qui s'étendent approximativement au centre de la piste de guidage (23) et sont de préférence montés élastiquement.

8. Dispositif selon l'une des revendications précédentes, caractérisé par le fait qu'il est incorporé dans un appareil (11) de traitement de documents dans lequel le dispositif de positionnement (13) est placé horizontalement à côté d'un dispositif d'impression (15) et est relié à ce dernier par le trajet de transport (16), un dispositif de triage et d'empilement (21) étant éventuellement prévu horizontalement à proximité immédiate.

9. Dispositif selon l'une des revendications précédentes, caractérisé par le fait qu'un dispositif électronique d'entrée et de commande (17) avec un clavier (18) est placé de préférence de façon amovible devant la zone d'introduction et par le fait que l'entraînement (41) peut être enclenché et déclenché en fonction d'une impulsion de commande provenant du dispositif d'entrée et de commande (17).

10. Dispositif selon l'une des revendications précédentes, caractérisé par le fait que, sur le trajet de transport (16) derrière la zone d'introduction (19), sont placés des détecteurs (45, 90, 65) pour une mesure des dimensions des documents afin de déterminer leur nature, pour un contrôle effectué de préférence par une mesure de transparence lumineuse pour éviter l'acheminement de documents en double ou superposés et/ou pour une mesure de l'épaisseur des documents effectuée en particulier de manière inductive.

FIG.1

FIG. 2

FIG. 3

FIG. 4

FIG.5